# FASCICULE DE BREVET EUROPEEN

(11) **EP 0 836 882 B1**
(45) Date de publication et mention de la délivrance du brevet: **19.09.2001**
(21) Numéro de dépôt: 97420192.3
(22) Date de dépôt: 17.10.1997
(51) Int. Cl.: B01J 27/224, C04B 38/00

(54) **Support de catalyseur en mousse de SiC à peau renforcée et systèmes catalytiques correspondants**
Katalysatorträger aus Siliciumcarbidschaum mit verstärkter Aussenhaut und entsprechende katalytische Systeme
Catalyst support made of SiC foam with a reinforced skin and catalytic systems accordingly

(30) Priorité: 21.10.1996 FR 9613000
(43) Date de publication de la demande: 22.04.1998
(73) Titulaire: CENTRE NATIONAL DE LA RECHERCHE SCIENTIFIQUE, 75974 Paris (FR)
(72) Inventeur: Prin, Marie, 38500 Saint Cassien (FR); Ollivier, Benoît, 38500 Voiron (FR); Lamaze, Airy Pierre, 38500 Saint Cassien (FR)
(74) Mandataire: Mougeot, Jean-Claude

(56) Documents cités:
- EP-A- 0 337 285
- EP-A- 0 543 752
- EP-A- 0 624 560
- US-A- 4 818 732

## Description

### DOMAINE DE L'INVENTION

L'invention concerne le domaine des systèmes catalytiques, et plus spécialement les supports de catalyseurs à base de mousse de SiC.

### ETAT DE LA TECHNIQUE

On connaît déjà, par la demande française FR-A1-2705340, un procédé pour fabriquer des mousses de SiC et leur utilisation comme supports de catalyseurs, notamment pour pots d'échappement.

### PROBLEMES POSES

Un des problèmes posés par l'utilisation des mousses de SiC en tant que support de catalyseur est la fragilité et la friabilité de cette mousse, face aux contraintes mécaniques résultant tant de la manipulation dudit support, que de sa mise en place et son sertissage dans un pot catalytique.

La présente invention vise donc à obtenir un support qui soit à la fois manipulable sans dégradation physique, notamment par effritement de la mousse, et qui supporte la pression nécessaire à la fixation d'un tel support dans un pot catalytique.

Un autre problème posé par l'utilisation de ces mousses de SiC en tant que support est une certaine hétérogénéité des dimensions finales à l'issue des différentes étapes du procédé de fabrication tel que décrit dans la demande FR-A1-2705340.

Or, le système catalytique doit être introduit dans une enveloppe métallique de pot d'échappement aux dimensions prédéterminées. Toute hétérogénéité dimensionnelle importante du support du catalyseur est donc à proscrire.

### OBJETS DE L'INVENTION

Un premier objet de l'invention est constitué par un support de catalyseur en mousse de SiC à peau renforcée.

Un deuxième objet est un procédé pour fabriquer ce support en mousse de SiC à peau renforcée.

Un autre objet est constitué par les systèmes catalytiques incorporant un tel support.

### DESCRIPTION DE L'INVENTION

L'invention est un support de catalyseur à base de mousse de SiC se présentant comme une pièce de forme monolithique ayant des caractéristiques mécaniques améliorées caractérisé en ce que :
a) ladite pièce a des parois (ou surfaces) externes (dites aussi latérales) non destinées à être traversées par un flux soumis à l'action dudit catalyseur comprenant une peau de renfort mécanique;
b) ladite peau comprend du SiC et a des caractéristiques mécaniques supérieures à celles de ladite mousse, de manière à obtenir un gradient de caractéristiques mécaniques élevé à l'interface peau/mousse de SiC;
c) l'épaisseur de ladite peau est choisie de manière à permettre la manipulation et la transformation dudit support en système catalytique puis l'utilisation ultérieure dudit système catalytique, en particulier sans effritement dudit support.

Lesdites parois externes non destinées à assurer le passage du flux à traiter par le catalyseur peuvent ainsi être recouvertes en totalité ou seulement en partie par la peau.

Un gradient de densité existe également à l'interface peau/mousse et est choisi de manière à assurer la cohésion entre le corps de mousse (destiné à recevoir le catalyseur) et la peau; cette cohésion doit être maintenue au cours de la fabrication dudit support, de sa transformation en un système catalytique ou de l'utilisation dudit système catalytique.

Le gradient de densité entre la peau et la mousse s'étend sur une épaisseur d'au moins 5%, de préférence 10%, de celle de la peau pour assurer la cohésion entre la peau et la mousse.

En fait on peut dire que la peau, en général d'épaisseur supérieure à 0,5 mm, est à base essentiellement de SiC et est obtenue, comme cela sera vu en détail plus loin, en renforçant la surface latérale d'une pièce de forme en mousse de SiC de surface spécifique élevée par du SiC sur une certaine épaisseur, de telle sorte qu'il y a finalement une continuité entre le corps de mousse et la peau, cette dernière ayant perdu la partie essentielle de la macroporosité visible (pores généralement supérieurs à 1 mm) de la mousse dont elle est issue, mais gagné en caractéristiques mécaniques. Ainsi le support selon l'invention non seulement possède une très bonne résistance à la compression, à l'effritement et peut être usiné très facilement grâce à sa peau très résistante, mais possède également une très bonne résistance au cisaillement entre sa peau et son corps en mousse à surface spécifique élevée grâce à la continuité du matériau entre peau et mousse.

La peau présente typiquement une résistance mécanique à l'écrasement au moins 5 fois supérieure à celle de la mousse et/ou une densité moyenne au moins cinq fois supérieure à celle de la mousse.

On peut inclure dans la peau des éléments de renforts, habituellement sous forme divisée et/ou dispersée; il s'agit principalement de charges minérales du type réfractaire, inerte, sous forme de particules, fibres ... telles que oxydes, carbone, carbures (par exemple SiC), nitrures ou leur combinaisons.

Il est important de noter que cette peau ne possède pas les propriétés et l'efficacité d'un support catalytique actif. En effet la phase catalytique qui pourrait y être déposée aurait une efficacité quasiment inexistante, les pores millimétriques permettant la libre circulation des gaz à traiter ayant disparu, comme cela a été dit. Ainsi la peau n'a plus une structure de mousse à travers laquelle peuvent transiter lesdits gaz mais plutôt celle d'un solide poreux, par exemple du type des briques réfractaires poreuses; les pertes de charge pour une même vitesse de gaz sont typiquement de 100 à 1000 fois plus élevées dans la peau que dans la mousse, la densité 5 à 15 fois plus élevée alors que la surface spécifique peut rester du même ordre de grandeur.

On peut imprégner ladite peau par un produit inerte, par exemple de la cire ou de la paraffine, préalablement à la transformation dudit support en un système catalytique par dépôt de phase active sur la mousse, ladite imprégnation évitant à la phase active d'être déposée inutilement dans la peau.

Le support (corps de mousse et peau) selon l'invention, a une surface spécifique BET d'au moins 1 m²/g, typiquement comprise entre 1 et 40 m²/g et habituellement entre 5 et 40 m²/g. On note également une résistance à l'écrasement améliorée d'au moins un facteur 2, de préférence 5, entre un support mousse ayant une peau et le même support mousse sans peau. De plus la densité de la peau est d'au moins 2 fois, de préférence 5 fois, supérieure à celle de la mousse. Le support ne comporte pas plus de 0,5% (de préférence 0,1%) de Si résiduel.

Un autre aspect de l'invention est un procédé de fabrication d'un support de catalyseur conforme à ce qui est décrit ci-dessus, dans lequel :
a) On imprègne une pièce de forme en mousse de polyuréthanne par une suspension de poudre de Si dans une résine organique, comportant de préférence 1 à 10% en poids de réticulant et dont la molécule comporte de l'oxygène, le rapport pondéral du Si à la résine étant en général compris entre 0,55 à 1,20; lesdites suspension, poudre et résine sont dites « de mousse »;
b) on élimine, par exemple par centrifugation, compression, essorage ... l'excédent de suspension « de mousse »; le rapport de la masse de résine « de mousse imprégnant le polyuréthanne à la masse de polyuréthanne est alors typiquement compris entre 3 et 9;
c) on réticule (ou polymérise) la résine « de mousse contenue dans la mousse de polyuréthanne par augmentation progressive de la température; ce traitement thermique comprend généralement une vitesse de montée en température d'au moins 3°C/min, de préférence voisine de 5°C/min, jusqu'à une température comprise entre 200 et 400°C, de préférence 200-300°C, en maintenant cette température au moins 5 minutes, typiquement entre 5 et 90 minutes;
d) après refroidissement, on applique, sur tout ou partie des parois externes non destinées à être traversées par le flux de produit à traiter par ledit support de catalyseur, un mélange de poudre de Si, de résine organique, comportant de préférence 1 à 10% en poids de réticulant, et avantageusement d'une charge minérale de renfort; lesdits mélange, poudre et résine sont dits « de peau »; avantageusement le rapport pondéral de poudre de Si « de peau sur la résine « de peau » est compris entre 0,55 à 1,20.
e) on réticule (ou polymérise) la résine « de peau » appliquée sur les parois extérieures de la mousse de polyuréthanne par un traitement thermique généralement identique à celui de l'étape c);
f) on carbonise simultanément la mousse de polyuréthanne et les résines « de peau » et « de mousse » par augmentation progressive de la température typiquement jusqu'à 1000°C, sous atmosphère non oxydante et avec de préférence une vitesse de montée en température comprise entre 1 et 10°C/min, ou mieux 1 à 5°C/min;
g) on carbure les poudres de Si « de mousse » et « de peau » et on siliciure simultanément le carbone « de mousse » et « de peau obtenu à l'étape précédente typiquement par augmentation progressive de la température de 1000°C à une température comprise entre 1300°C et 1600°C, avec une vitesse de montée en température inférieure à 10°C/min, de préférence comprise entre 1 et 4°C/min, sous atmosphère inerte, et maintien de la température pendant au moins 0,5 h, de préférence 2 à 5 heures à ladite température T, toujours sous atmosphère non oxydante;
h) le carbone résiduel est éliminé par oxydation du produit généralement entre 650°C et 950°C.

La charge minérale, par exemple une poudre fine de SiC, introduite dans la suspension de "peau", permet en particulier de réduire les écarts de coefficient de rétreint entre le corps de mousse et la peau et évite ainsi la fragilisation de la liaison peau-mousse. Elle a, de plus, tendance à boucher la surface spécifique de la peau ce qui évite le dépôt inutile, et la perte, de phase catalytique dans la peau.

Après chacune des étapes de réticulation (c, e) on peut usiner la pièce solide, sachant que le procédé selon l'invention permet d'obtenir des retraits dimensionnels très homogènes dans le support final et ainsi une très bonne plage de précision.

Une variante du procédé consiste à partir d'une pièce de forme en mousse de SiC à surface spécifique élevée, pouvant être obtenue par combinaison des étapes a, b, c, f, g décrites ci-dessus ou par tout procédé tels que ceux décrits dans l'état de la technique ci-dessus, et à appliquer à cette mousse de SiC les étapes d, e, f, g, h décrites ci-dessus.

L'étape d) d'application du mélange « de peau » peut se faire par tout moyen connu de façon à ce que le mélange pénètre dans la mousse de polyuréthanne ou de SiC, par sa surface externe, selon une épaisseur qui est celle recherchée pour la peau, en général supérieure à 0,5 mm. Cette application est réalisée par exemple à l'aide d'une ou plusieurs buses projetant ledit mélange « de peau » sur la pièce de mousse, en une ou plusieurs passes ou par trempage de la surface externe dans le mélange de "peau". L'épaisseur de pénétration du mélange est réglée à l'aide du débit du mélange, de l'épaisseur trempée, de la viscosité dudit mélange, de sa température, de la vitesse d'application, du nombre de passes, etc...

La charge minérale de renfort optionnelle est par exemple à base de particules ou fibres de SiC.

Au lieu d'appliquer directement le mélange « de peau » sur la mousse de polyuréthanne ou de SiC, on peut l'appliquer, au moins par endroits par l'intermédiaire d'un support de manière à incorporer ledit support intermédiaire au support de catalyseur final. Le support intermédiaire peut être du type film ou feuille pouvant disparaître lors de la carbonisation en donnant du carbone (par exemple matières synthétique ou naturelle typiquement cellulosique) pour assurer la cohésion peau-mousse, ou encore d'un support du type tissé, grille, bande ajourée laissant un passage au mélange de "peau" et pouvant subsister après chauffage.
Ledit support intermédiaire peut être enduit avec ledit mélange « de peau » avant de l'appliquer sur les parois externes. Ainsi le support intermédiaire se trouve incorporé au support catalytique en des endroits prédéterminés des parois externes.
Il est avantageux de choisir pour une composition donnée de suspension « de mousse », un mélange "de peau" permettant d'éviter tout risque de décohésion entre la mousse et la peau dû au retrait différent de la mousse et de la peau lors des traitements thermiques.

Quand la pièce de forme possède un axe de symétrie, il est avantageux de conduire l'étape c) de réticulation de la résine « de mousse dans un réacteur rotatif ce qui permet d'éviter toute déformation ou collage de la mousse sous l'effet de son poids avant durcissement complet.

Un autre aspect de l'invention concerne les systèmes catalytiques réalisés à partir du support selon l'invention.

En général un tel système catalytique comprend en plus dudit support un catalyseur (ou phase catalytique active), déposé sur la mousse de SiC, le tout pouvant être enfermé dans une enveloppe métallique, dans lequel circule un gaz à traiter, par exemple pot et gaz d'échappement d'automobile. En particulier, dans ce cas, le support peut être d'abord revêtu d'une couche de cérine sur laquelle sont déposés du platine et du rhodium. Pour limiter le dépôt de phase active coûteuse dans la peau on peut; comme cela a été déjà vu, utiliser un mélange de "peau" contenant une charge minérale et/ou traiter la peau par un produit inerte, du type cire ou paraffine; ainsi la peau a un pourcentage en poids de phase active valant de préférence moins de 10%, voire moins de 1%, de celui de la phase active contenue dans la mousse. On peut réduire également la perte de catalyseur en limitant l'épaisseur de la peau.

### EXEMPLES

### Exemple 1

On a réalisé des supports à base de mousse de SiC avec une peau d'environ 3 mm d'épaisseur ayant la forme d'un cylindre de diamètre 60 mm et de longueur 100 mm, selon l'invention, de la façon suivante :
- imprégnation de 36 g de mousse de polyuréthanne de 45 ppi (pores par inch) par une suspension de mousse comprenant du Si (masse Si/masse résine= 0,7) dans de la résine furfuryllique, avec 3% en masse de réticulant (hexaméthylènetétramine): le bloc imprégné a une masse de 470 g (masse résine/mousse polyuréthanne 7,09)
- étuvage à 200°C pendant 1 heure dans une cage rotative évitant tout collage et déformation de la mousse; vitesse de montée en température : 5°C/min; masse après étuvage : 338 g
- usinage de 4 pièces de diamètre 60 mm et longueur 100 mm, de masse 33 g
- enduction des surfaces latérales des pièces, en laissant les extrémités des cylindres libres pour le passage ultérieur du flux à traiter par le catalyseur, par un mélange « de peau » comportant du silicium et de la résine furfuryllique avec 3% en masse de réticulant (masse Si/masse résine= 0,7), à l'aide d'une buse; le mélange « de peau » est porté à 60°C et se trouve dans un bac sous pression (environ 1 bar). Ceci permet d'obtenir un jet continu de 3 mm sur la buse et un débit de 21 g/min de mélange. Avec une vitesse d'avance de la buse de 35 mm/min, et une rotation de 16 tours/min de la mousse, une peau jointive est obtenue
- étuvage de la mousse comportant le dépôt de mélange « de peau » dans une cage rotative pour éviter tout collage, avec une montée à 5°C/min de l'ambiante à 200°C, pendant 15 minutes. Masse d'une pièce après étuvage : 79,4 g
- carbonisation, puis carburation du silicium et siliciuration du carbone obtenu lors de la carbonisation, par montée en température à 5°C/min de l'ambiante à 250°C, puis 3°C/min de 250°C à 1370°C et maintien 4h à 1370°C; l'ensemble est réalisé sous débit d'argon circulant avec une vitesse linéaire de 3,5 cm/s (TPN). La masse après synthèse est de 55,6 g
- l'excès de carbone résiduel est éliminé par oxydation sous air à 810°C (7% de carbone résiduel).

Le support (mousse + peau) a une surface spécifique de 14,5 m²/g et une résistance mécanique à l'écrasement de 14 bar mesurée entre deux plateaux parallèles, pour une épaisseur de peau de 3 ± 0,5 mm. Il est bien évident qu'une telle résistance à l'écrasement mesurée sur le support fini dépend non seulement de la qualité intrinsèque de la mousse et de la peau, mais également de la dimension du support, de l'épaisseur de la peau, autrement dit des caractéristiques géométriques des composants du support.
La mousse seule a une résistance à l'écrasement de 0,3 bar.
La densité de la mousse est de 0,09 g/cm³.
La densité moyenne de la peau est de 1,10 g/cm³ : au voisinage de la mousse, cette densité est comprise entre 0,09 et 1,10 g/cm³, un tel gradient permet d'avoir la c ohésion entre peau et mousse.

### Exemple 2

Dans cet exemple on a réalisé un support ayant une peau discontinue.

La pièce cylindrique de mousse de polyuréthanne comportant la suspension « de mousse » réticulée a un diamètre de 150 mm et une longueur de 140 mm. La température du mélange « de peau » est de 60°C et le débit de mélange est de 20 g/min.

Avec une vitesse d'avance de la buse de 55 mm/min et une vitesse de rotation de 5,5 tr/min, on a réalisé une peau ayant la forme d'une bande enroulée en spirale non jointive (hélice) sur la surface latérale du cylindre, avec un pas de 1 cm. Après transformation en carbure de silicium, la résistance mécanique à la compression du support monolithique est de 9 bar.

Selon la même méthode on peut réaliser d'autres motifs de dessins, par exemple spirales croisées, anneaux et/ou génératrices non jointives, etc....

### Exemple 3

Dans cet exemple on a comparé un support catalytique dont la peau a été ou non traitée avec une matière inerte.
Tout d'abord un support a été traité pour y effectuer un dépôt catalytique comportant un dépôt de cérine puis un dépôt de Pt, sans que la peau ait été traitée par une matière inerte.

La peau du support a une porosité de 5% avec des pores de diamètre compris entre 100 et 300 µm.

Après imprégnation pour effectuer les dépôts de phase catalytique active, la peau comme le corps de mousse de SiC contiennent (en % poids) 30% de cérine puis 0,4% de Pt dans la peau et 0,8% de Pt dans la mousse. Par la suite, la peau d'un support catalytique identique a été traitée à la cire Siliplast TP 6000 (marque déposée de la société ZSCHIMMER & SCHWARZ de Lahnstein/Rhein) ayant un point de fusion de 102°C par badigeonnage, la peau étant maintenue à 120°C et la mousse à 20°C. Après dépôt des phases actives comme précédemment, on a noté que la peau contient seulement (en % poids) 5% de cérine et 0,06% de Pt et que la mousse contient des quantités normales de cérine de 28% et de Pt de 0,9%.

## Revendications

1. Support de catalyseur à base de mousse de SiC se présentant comme une pièce de forme monolithique ayant une résistance mécanique améliorée
**caractérisé en ce que** :
a) ladite pièce a des parois externes non destinées à être traversées par un flux soumis à l'action dudit catalyseur comprenant une peau de renfort mécanique
b) ladite peau comprend du SiC, et est de caractéristiques mécaniques supérieures à celles de ladite mousse, de manière à obtenir un gradient de caractéristiques mécaniques élevé, à l'interface peau/mousse de SiC
c) l'épaisseur de ladite peau est choisie de manière à permettre la manipulation et la transformation dudit support en système catalytique, puis l'utilisation ultérieure dudit système catalytique.

2. Support selon la revendication 1 **caractérisé en ce qu'**il comporte un gradient de densité à l'interface peau/mousse tel qu'il assure la cohésion entre la peau et la mousse.

3. Support selon l'une quelconque des revendications 1 ou 2 **caractérisé en ce que** ledit support présente l'une au moins des propriétés suivantes : une résistance mécanique à l'écrasement au moins 2 fois, de préférence 5 fois, supérieure à celle d'un même support sans peau, une densité moyenne de la peau au moins 5 fois supérieure à celle de la mousse.

4. Support selon l'une quelconque des revendications 1 à 3 **caractérisé en ce que** la peau comprend des éléments de renforts mécaniques de préférence sous forme de charge minérale et/ou un support intermédiaire.

5. Support selon les revendications 1 à 4 **caractérisé en ce que** la peau contient un produit inerte, de préférence une cire, de la paraffine ou une charge minérale.

6. Support selon l'une quelconque des revendications 1 à 5 **caractérisé en ce qu'**il présente l'une au moins des caractéristiques suivantes : une surface spécifique BET supérieure à 1 m²/g, de préférence à 5 m²/g, une teneur en Si résiduel d'au plus 0,5 %, de préférence 0,1%.

7. Procédé d'obtention du support de catalyseur des revendications 1 à 6, dans lequel :
a) on imprègne une pièce de forme en mousse de polyuréthanne par une suspension de poudre de Si dans une résine organique dont la molécule comporte de l'oxygène, lesdites suspension, poudre et résine étant dites « de mousse »
b) on élimine l'excédent de suspension "de mousse"
c) on réticule la résine « de mousse » contenue dans la mousse de polyuréthanne par augmentation progressive de la température
d) après refroidissement, on applique, sur tout ou partie des parois externes non destinées à être traversées par le flux à traiter par ledit support de catalyseur, un mélange de poudre de Si, de résine organique, comportant avantageusement une charge minérale de renfort, lesdits mélange, poudre et résine étant dits « de peau »
e) on réticule la résine "de peau" appliquée sur les parois extérieures de la mousse par un traitement thermique comme dans l'étape c)
f) on carbonise simultanément la mousse de polyuréthanne et les résines « de peau » et « de mousse » par augmentation progressive de la température sous atmosphère non oxydante
g) on carbure les poudres de Si « de mousse » et « de peau et on siliciure simultanément le carbone « de mousse » et « de peau» obtenu à l'étape précédente par augmentation progressive de la température
h) le carbone résiduel est éliminé par oxydation du produit.

8. Procédé selon la revendication 7 **caractérisé en ce qu'**un usinage de la pièce de forme est effectué au moins après l'une des étapes c) et e).

9. Procédé selon l'une quelconque des revendications 7 ou 8 **caractérisé en ce que** pour une composition de suspension « de mousse» donnée on choisit une composition de mélange « de peau »de façon à ce que son retrait n'entraîne pas de décohésion entre la mousse et la peau.

10. Procédé selon l'une quelconque des revendications 7 à 9**caractérisé en ce qu'**on applique le mélange « de peau par tous moyens connus, de préférence par projection à l'aide d'au moins une buse ou par trempage.

11. Procédé selon l'une quelconque des revendications 7à 10 **caractérisé en ce qu'**on applique le mélange «de peau» sur la paroi externe par l'intermédiaire d'un support de manière à incorporer ledit support intermédiaire au'dit support de catalyseur, ledit support intermédiaire étant éventuellement enduit au préalable avec le mélange « de peau ».

12. Procédé selon l'une quelconque des revendications 7 à 11 **caractérisé en ce que**, lorsque la pièce de forme possède un axe de symétrie, l'étape c) de réticulation est effectuée dans un réacteur rotatif pour mettre en rotation la pièce selon ledit axe de symétrie.

13. Procédé selon l'une quelconque des revendications 7 à 12 **caractérisé en ce que** la peau du support de catalyseur résultant est traitée à l'aide d'un produit inerte, de préférence une cire ou de la paraffine.

14. Système catalytique comprenant le support de catalyseur de l'une des revendications 1 à 6, ou obtenu selon le procédé de l'une des revndications 7 à 13.

15. Système catalytique selon la revendication 15 **caractérisé en ce qu'**il comporte un catalyseur déposé, ce catalyseur comprenant de préférence un dépôt de cérine recouvert d'un dépôt de Pt et Rh.

16. Système catalytique selon l'une quelconque des revendications 15 ou 16 **caractérisé en ce que** la peau du support catalytique a un taux de catalyseur valant moins de 10%, de celui de catalyseur contenu dans la mousse.

## Claims

1. SiC foam-based catalyst carrier in the form of a monolithic moulded part having improved mechanical strength, **characterised in that**:
a) said part has external walls not intended to be traversed by a flux subjected to the action of said catalyst comprising a mechanical reinforcing skin
b) said skin comprises SiC and has mechanical characteristics better than those of said foam so as to obtain a high gradient of mechanical characteristics at the interface between skin and SiC foam
c) the thickness of said skin is selected so as to allow the handling and transformation of said carrier into a catalytic system, then the subsequent use of said catalytic system.

2. Carrier according to claim 1, **characterised in that** it has a density gradient at the skin/foam interface such that it ensures cohesion between the skin and the foam.

3. Carrier according to any one of claims 1 or 2, **characterised in that** said carrier has at least one of the following properties: mechanical resistance to crushing which is at least twice and preferably five times higher than that of the same carrier without a skin and a mean skin density at least five times higher than that of the foam.

4. Carrier according to any one of claims 1 to 3, **characterised in that** the skin comprises mechanical reinforcing elements preferably in the form of a mineral charge and/or an intermediate carrier.

5. Carrier according to claims 1 to 4, **characterised in that** the skin contains an inert product, preferably a wax, paraffin or a mineral charge.

6. Carrier according to any one of claims 1 to 5, **characterised in that** it has at least one of the following characteristics: a BET specific surface area greater than 1 m²/g, preferably 5 m²/g and a residual Si content of at most 0.5%, preferably 0.1%.

7. Process for obtaining the catalyst carrier according to claims 1 to 6, in which:
a) a polyurethane foam moulded part is impregnated with a suspension of Si powder in an organic resin containing oxygen, said suspension, powder and resin being so-called "foam" suspension, powder and resin
b) the excess of "foam" suspension is removed
c) the "foam" resin contained in the polyurethane foam is crosslinked by gradually raising the temperature
d) after cooling, a mixture of Si powder and organic resin advantageously containing a reinforcing mineral charge is applied to all or part of the external walls not to be traversed by the flux to be treated with said catalyst carrier, said mixture, powder and resin being so-called "skin" mixture, powder and resin
e) the "skin" resin applied to the external walls of the foam is crosslinked by a heat treatment as in stage c)
f) the polyurethane foam and the "skin" and "foam" resins are simultaneously carbonised by gradually raising the temperature in a non-oxidising atmosphere
g) the "foam" and "skin" Si powders are carburised and the "foam" and "skin" carbon obtained during the preceding stage is simultaneously silicided by gradually raising the temperature
h) the residual carbon is removed by oxidation of the product.

8. Process according to claim 7, **characterised in that** the moulded part is machined at least after one of stages c) and e).

9. Process according to any one of claims 7 or 8, **characterised in that**, for a given "foam" suspension composition, a "skin" mixture composition is selected so that its shrinkage does not lead to loss of cohesion between the foam and the skin.

10. Process according to any one of claims 7 to 9, **characterised in that** the "skin" mixture is applied by any known means, preferably by spraying using at least one nozzle or by soaking.

11. Process according to any one of claims 7 to 10, **characterised in that** the "skin" mixture is applied to the external wall by means of a carrier so as to incorporate said intermediate carrier in said catalyst carrier, said intermediate carrier optionally previously being coated with the "skin" mixture.

12. Process according to any one of claims 7 to 11, **characterised in that**, if the moulded part has an axis of symmetry, the crosslinking stage c) is carried out in a rotating reactor in order to set the part into rotation round said axis of symmetry.

13. Process according to any one of claims 7 to 12, **characterised in that** the resultant catalyst supporting skin is treated with an inert product, preferably a wax or paraffin.

14. Catalytic system comprising the catalyst carrier according to one of claims 1 to 6 or obtained by the process according to one of claims 7 to 13.

15. Catalytic system according to claim 15, **characterised in that** it comprises a deposited catalyst, this catalyst preferably comprising an ceria deposit covered with a Pt and Rh deposit.

16. Catalytic system according to any one of claims 15 or 16, **characterised in that** the skin of the catalytic carrier has a catalyst content which is less than 10% of that of catalyst contained in the foam.

## Patentansprüche

1. Katalysatorträger aus SiC-Schaum in Gestalt eines monolithischen Formkörpers mit verbesserter mechanischer Festigkeit, **dadurch gekennzeichnet, dass**
a) der Körper Außenwände hat, die von einem Mediumfluss, welcher der Einwirkung des Katalysators ausgesetzt ist, nicht durchdrungen werden sollen und eine verstärkte Außenhaut aufweisen,
b) die Außenhaut SiC enthält und bessere mechanische Eigenschaften aufweist als der Schaum, so dass an der Grenzfläche Außenhaut-Siliciumcarbidschaum ein hoher Festigkeitsgradient erzeugt wird,
c) die Dicke der Außenhaut so gewählt wird, dass die Bearbeitung und die Umwandlung des Trägers in ein katalytisches System und dann die spätere Verwendung des katalytischen Systems ermöglicht werden.

2. Träger nach Anspruch 1, **dadurch gekennzeichnet, dass** er an der Grenzfläche Außenhaut-Schaum einen solchen Dichtegradienten aufweist, dass der Zusammenhalt zwischen Außenhaut und Schaum gewährleistet ist.

3. Träger nach einem der Ansprüche 1 oder 2, **dadurch gekennzeichnet, dass** der Träger mindestens eine der folgenden Eigenschaften aufweist: eine Druckfestigkeit, die mindestens zweimal, vorzugsweise fünfmal höher ist als die eines gleichen Trägers ohne Außenhaut, eine mittlere Dichte der Außenhaut, die mindestens fünfmal höher ist als die des Schaums.

4. Träger nach einem der Ansprüche 1 bis 3, **dadurch gekennzeichnet, dass** die Außenhaut mechanische Verstärkungselemente, vorzugsweise in Form eines mineralischen Füllstoffs und/oder eines Zwischenträgers aufweist.

5. Träger nach Anspruch 1 bis 4, **dadurch gekennzeichnet, dass** die Außenhaut einen reaktionsträgen Stoff, vorzugsweise Wachs, Paraffin oder einen mineralischen Füllstoff enthält.

6. Träger nach einem der Ansprüche 1 bis 5, **dadurch gekennzeichnet, dass** er mindestens eines der folgenden Merkmale aufweist: eine spezifische Oberfläche BET größer als 1 m²/g, vorzugsweise größer als 5 m²/g, einen Restsiliciumgehalt von höchstens 0,5 %, vorzugsweise 0,1 %.

7. Verfahren zur Herstellung des Katalysatorträgers gemäß Anspruch 1 bis 6, bei dem:
a) ein Formkörper aus Polyurethanschaum mit einer Suspension von Si-Pulver in einem organischen Harz, dessen Molekül Sauerstoff enthält, imprägniert wird, wobei die Suspension, das Pulver und das Harz Schaumsuspension, Schaumpulver und Schaumharz genannt werden,
b) der Schaumsuspensionsüberschuss entfernt wird,
c) das im Polyurethanschaum enthaltene Schaumharz durch schrittweise Erhöhung der Temperatur vemetzt wird,
d) die Außenwände, die von dem mit dem Katalysatorträger zu behandelnden Mediumfluss nicht durchdrungen werden sollen, nach erfolgter Abkühlung ganz oder teilweise mit einem Gemisch aus Si-Pulver und organischem Harz, das vorteilhafterweise einen mineralischen Verstärkungsfüllstoff enthält, versehen werden, wobei das Gemisch, das Pulver und das Harz Außenhautgemisch, Außenhautpulver und Außenhautharz genannt werden,
e) das auf die Außenflächen des Schaums aufgetragene Außenhautharz durch eine Wärmebehandlung wie in Schritt c) vernetzt wird,
f) der Polyurethanschaum und die Außenhaut- und Schaumharze durch schrittweise Erhöhung der Temperatur unter nicht oxidierender Atmosphäre gleichzeitig verkohlt werden,
g) die Si-Schaum- und Außenhautpulver karburiert und die im vorhergehenden Schritt erzeugten Schaum- und Außenhautkohlenstoffe bei schrittweiser Erhöhung der Temperatur gleichzeitig silicidiert werden,
h) der Restkohlenstoff durch Oxidierung des Produkts entfernt wird.

8. Verfahren nach Anspruch 7, **dadurch gekennzeichnet, dass** eine Bearbeitung des Formkörpers zumindest nach einem der Schritte c) und e) durchgeführt wird.

9. Verfahren nach einem der Ansprüche 7 oder 8, **dadurch gekennzeichnet, dass** bei einer gegebenen Schaumsuspensionszusammensetzung eine solche Außenhautgemischzusammensetzung gewählt wird, dass ihre Schrumpfung nicht zu einer Lösung des Zusammenhalts zwischen Schaum und Außenhaut führt.

10. Verfahren nach einem der Ansprüche 7 bis 9, **dadurch gekennzeichnet, dass** das Außenhautgemisch mit beliebigen bekannten Mitteln, vorzugsweise durch Spritzen mittels wenigstens einer Düse oder durch Eintauchen aufgebracht wird.

11. Verfahren nach einem der Ansprüche 7 bis 10, **dadurch gekennzeichnet, dass** das Außenhautgemisch vermittels eines Trägers auf die Außenwand aufgebracht wird, so dass der Zwischenträger in den Katalysatorträger eingebettet wird, wobei der Zwischenträger vorher eventuell mit dem Außenhautgemisch versehen wird.

12. Verfahren nach einem der Ansprüche 7 bis 11, **dadurch gekennzeichnet, dass** dann, wenn der Formkörper eine Symmetrieachse besitzt, der Vernetzungsschritt c) in einem Rotationsreaktor durchgeführt wird, um den Körper entsprechend der Symmetrieachse in Drehbewegung zu versetzen.

13. Verfahren nach einem der Ansprüche 7 bis 12, **dadurch gekennzeichnet, dass** die resultierende Außenhaut des Katalysatorträgers mit einem reaktionsträgen Stoff, vorzugsweise mit Wachs oder Paraffin behandelt wird.

14. Katalytisches System mit dem Katalysatorträger gemäß einem der Ansprüche 1 bis 6 oder hergestellt nach dem Verfahren gemäß einem der Ansprüche 7 bis 13.

15. Katalytisches System nach Anspruch 14, **dadurch gekennzeichnet, dass** es mit einem Katalysator belegt ist, wobei dieser Katalysator vorzugsweise einen Cerinüberzug aufweist, welcher mit einem Pt- und Rh-Überzug versehen ist.

16. Katalytisches System nach einem der Ansprüche 15 oder 16, **dadurch gekennzeichnet, dass** die Außenhaut des Katalysatorträgers einen Katalysatorgehalt hat, der weniger als 10 % des im Schaum enthaltenen Katalysatorgehalts ausmacht.
